# EUROPEAN PATENT SPECIFICATION

(11) **EP 3 822 592 B1**
(45) Date of publication and mention of the grant of the patent: **28.06.2023**
(21) Application number: 20207651.9
(22) Date of filing: 13.11.2020
(51) Int. Cl.: G01F 15/18, G01F 15/00, B25B 13/48, E03B 7/07

(54) **DEVICE FOR INSTALLING OR REMOVING WATER METERS**
VORRICHTUNG ZUM INSTALLIEREN ODER DEINSTALLIEREN VON WASSERZÄHLERN
DISPOSITIF PERMETTANT D'INSTALLER OU DE RETIRER DES COMPTEURS D'EAU

(30) Priority: 14.11.2019 GB 201916596
(43) Date of publication of application: 19.05.2021
(73) Proprietor: WHC Hire Services Ltd, Cheltenham, Gloucestershire GL51 4GA (GB)
(72) Inventor: Clutterbuck, James, Worcester, Worcestershire WR8 9LL (GB); Hickinbotham, John, Pershore, Worcestershire WR10 2EH (GB)
(74) Representative: Wynne-Jones IP Limited

(56) References cited:
- EP-A1- 0 730 138
- EP-A2- 0 210 933
- DE-C1- 19 748 111
- GB-A- 2 225 641
- JP-U- H0 581 363
- JP-U- S57 135 924
- JP-Y2- H0 330 828
- US-A- 4 995 643
- US-B1- 8 936 038

## Description

### TECHNICAL FIELD

This invention relates to a device for installing and removing water meters. The invention relates also to methods of installing or removing a water meter.

### BACKGROUND

The use of water meters has grown continuously in recent years, with usage expected to increase further in the future. There is therefore a demand for installation of new water meters as well as maintenance or replacement of existing meters. Water meters are commonly fitted by screwing them into valves inside boundary boxes sunk into the pavement or roadway outside a property. These boundary boxes are typically only slightly wider than the water meter itself, meaning there is little clearance around the meter once inside the boundary box. At present, installation or removal of water meters is typically performed by hand. This requires an engineer to kneel on the ground and reach down below ground level to manipulate the water meter inside the boundary box. This process can be difficult or uncomfortable for the engineer and may trigger joint or back pain.

JP H03 30828 Y2 discloses a device for installing or removing a water meter, the device comprising biased contact parts for holding a meter body.

EP 0210 933 A2 discloses a device for holding a water meter. The device uses small spheres biased by springs to contact and hold a water meter.

JP H05 81363 U discloses a handle for installing and removing a water meter, having a pair of opening and closing arms with a grip claw at the tip, wherein the pair of arms is biased by a spring to close and grab a water meter.

The present invention, in at least some of its embodiments, is directed to one or more of the problems and desires disclosed above.

### SUMMARY OF INVENTION

According to a first aspect of the invention, there is provided a device for installing or removing a water meter comprising:
a water meter receiving structure into which a water meter can be inserted, the water meter receiving structure comprising a handle or having an attachment point configured to allow a handle to be attached thereto; and
one or more retainers attached to the water meter receiving structure, each retainer comprising a biasing element and having a first position and a second position inward of the first position, in which each biasing element urges its respective retainer towards the first position and each retainer is moveable into the second position through contact with the water meter as the water meter is inserted into the water meter receiving structure, thereby retaining the water meter in the water meter receiving structure during use.

In this way a water meter can be conveniently retained in the device, permitting installation or removal of the water meter. This can be done even at sites such as boundary boxes where there is little clearance, typically only around 10mm. A further advantage is that subsequently the device and the water meter can be conveniently separated with the application of an insubstantial force.

For the avoidance of doubt, the term 'inwardly' is understood to mean inwardly with respect to the device, i.e. towards the interior of the device. The term 'outwardly' is understood to mean outwardly with respect to the device, i.e. towards the exterior of the device. The terms 'downwardly' and 'upwardly' refer to the device when it is vertically disposed, i.e. when the device is used to receive a vertically disposed water meter, in which instance the water meter is inserted into a lower portion of the water meter receiving structure. It will be apparent to the skilled reader that in principle the device of the invention can be used to install or remove water meters which are positioned in non-vertical alignments.

Each retainer may have a third position outward of the first position, wherein each biasing element is configured to urge its respective retainer towards the first position from the third position. This facility can assist the retainers to move to accommodate wider parts of the water meter on insertion or removal of the water meter into or from the water receiving structure.

Each retainer may comprise a pivot and a first tab which extends downwardly from the pivot, wherein the first tab has a retaining surface which, when the device is in use and the retainer is in the second position, engages the water meter so as to retain it in the water meter receiving structure. Each retainer may further comprise a second tab which extends upwardly from the pivot. The second tab may be inwardly inclined. The first and second tabs may be connected so that outwardly directed rotation of the second tab causes inwardly directed rotation of the first tab about the pivot, thereby causing the retainer to assume the second position. The first and second tabs may be connected so that inwardly directed rotation of the second tab causes outwardly directed rotation of the first tab about the pivot, thereby causing the retainer to assume the third position.

Each retainer may be configured so that when inward rotation of the second tab is prevented, the first tab can be outwardly rotated about the pivot independent of the second tab. Inward rotation of the second tab may be prevented for example through contact with the water meter during insertion of the water meter into the water meter receiving structure. This can assist in allowing the retainers to move during insertion to prevent them from blocking. The biasing element may urge the first tab towards the first position when the first tab is outwardly rotated in this way.

The pivot may be housed within the water meter receiving structure.

In some embodiments the first tab comprises an inwardly inclined shoulder, wherein the retaining surface is part of the inwardly inclined shoulder. This can facilitate the separation of the device from the water meter.

Each retainer may comprise one or more surfaces which are configured to abut against one or more end-stop surfaces of the water meter receiving structure to prevent the retainer from extending substantially outwardly of the water meter receiving structure. In some embodiments the end-stops prevent the retainer from extending more than 5mm outwardly of the water meter receiving structure. In this way it is possible to use the device in enclosed spaces such as boundary boxes where there is little clearance around the meter, typically only 10 mm.

The biasing element may be a spring.

The device may comprise a plurality of retainers. It has been found that two retainers are sufficient for the device to function in a satisfactory way.

The water meter receiving structure may comprise an aperture through which the water meter can be inserted.

The water meter receiving structure may be a framework structure. These embodiments can be advantageous for receiving water meters of the type having a wireless data collection unit. Such units can be bulky and difficult to accommodate, but an open framework structure can permit easy insertion of water meters having wireless data collection units into the device. Alternatively, the water meter receiving structure may be a shoe structure into which the water meter is inserted.

A portion of each retainer may extend below the water meter receiving structure.

According to a second aspect of the invention there is provided a method of installing or removing a water meter comprising the steps of:
providing a device according to claim 1;
inserting the water meter into the water meter receiving structure, wherein contact with the water meter as it is inserted into the water meter receiving structure causes the retainers to be moved into the second position, thereby retaining the water meter in the water meter receiving structure; and
installing the water meter at a site or removing the water meter from a site.

The water meter may comprise one or more peripherally disposed vertical grooves having a top wall portion. Each of the retainers may engage a top wall portion to retain the water meter in the water meter receiving structure.

The method may further comprise the step of separating the device from the water meter by applying a separating force to the water meter receiving structure which causes the retainers to move away from the second position, in which the biasing element urges the retainers towards the first position as the separation proceeds. It is highly advantageous that the device and a water meter received within the device can be separated in this easy and straightforward manner.

The method may further comprise the step of attaching a handle to the attachment point.

The step of installing the water meter at a site or removing the water meter from a site may comprise applying a torque to the water meter using the handle (whether the handle is attached or integral). Conveniently, the separating force can be applied using the handle.

According to a third aspect of the invention there is provided in combination a device of the first aspect of the invention and a water meter inserted and retained in the water meter receiving structure of the device. The combination may further comprise a handle attached to the attachment point of the water meter receiving structure.

Whilst the invention is described above, it extends to any inventive combination of the features set out above or in the following description, drawings, or claims. For example, any feature of the first aspect of the invention should be considered to be disclosed in connection with any feature of the second aspect of the invention.

### BRIEF DESCRIPTION OF THE DRAWINGS

The invention will now be described, by way of example only, with reference to the accompanying drawings, in which:
Figure 1 shows a side view of a device of the invention;
Figure 2 shows a cross-section of the device;
Figure 3 shows a cross-section of the device with water meter partially inserted, with the retainer in the first position;
Figure 4 shows a cross-section of the device with water meter fully inserted, with the retainer in the second position;
Figure 5 shows a plan view of the device;
Figure 6 shows the device with water meter partially inserted.

### DETAILED DESCRIPTION

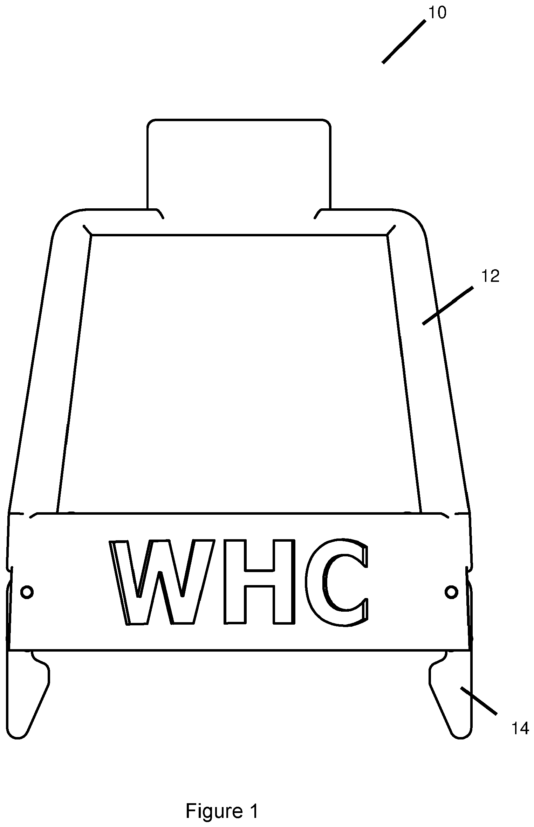

Figure 1 illustrates an exemplary device of the invention, shown generally at 10, comprising a water meter receiving structure 12and two retainers 14.The water meter receiving structure comprises a framework.

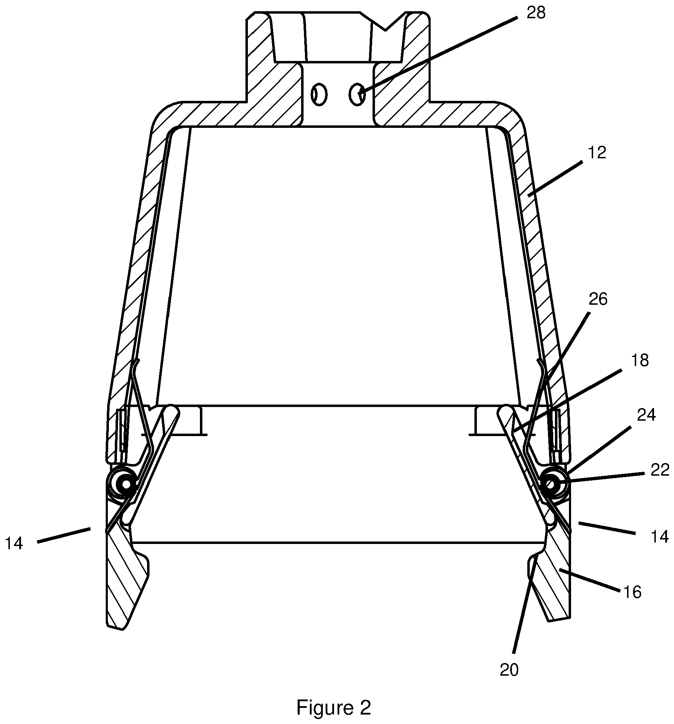

Figure 2 depicts a cross-section of the device. The device includes two retainers each attached to a framework by a pivot 22. Each retainer comprises a first tab 16 and a second tab 18. The first tab includes a shoulder 20 for engaging with a feature of a water meter. The shoulder is inwardly inclined such that application of a moderate force, typically by pulling the device upwards once the meter is installed, will cause the retainer to slide off the meter. In this embodiment, the retainer is a spring-loaded peg. More particularly, a spring 24, having a tail section 26, is attached to the pivot. The spring engages with both the first and second tabs of the retainer. In the configuration shown in figure 2, the retainers 14 are in a first, open position. This is the equilibrium position that the spring urges each retainer to adopt. Pressure on the second tabs 18 caused by contact with the water meter can cause the second tabs 18 to rotate outwardly which in turn causes the first tabs 16 to rotate inwardly. In this way, the retainers can assume a second, closed position.

The framework includes a connection point 28 for attaching a handle to allow the operator to install the water meter without having to kneel or crouch. It is also possible for the handle to be an integral feature of the device.

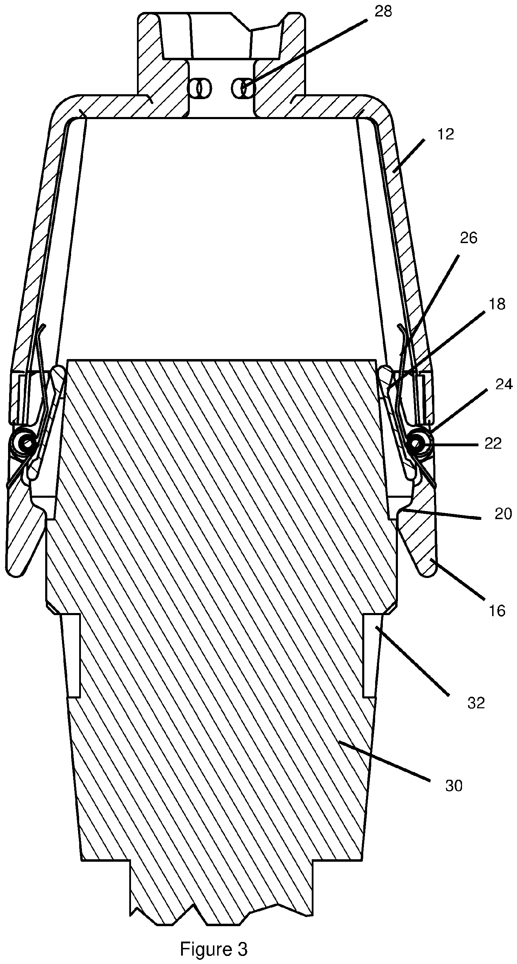

Figure 3 depicts the device in use with a water meter 30 having a feature 32. In this figure the meter is partially inserted into the framework. It can be seen that the retainer is in the first, open position, allowing the water meter to be inserted into the framework. The inner face of the retainer, below the shoulder, is angled away from the meter as illustrated so that contact with the meter will push the retainer into the open position. Each retainer is able to assume a third position in which the first tab rotates outwardly of the first position. The first tabs can rotate in this way even when the corresponding second tab abuts the surface of the water meter and thus cannot rotate inwardly. The spring urges the lower tab from the third position to the first position. The ability of the retainers to adopt the third position helps to ensure the retainer is able to slide over the meter. It can be seen in figure 3 that the retainer does not substantially extend radially outwards from the framework when in the open position. This is highly advantageous as there is typically little clearance around a water meter once inside a boundary box.

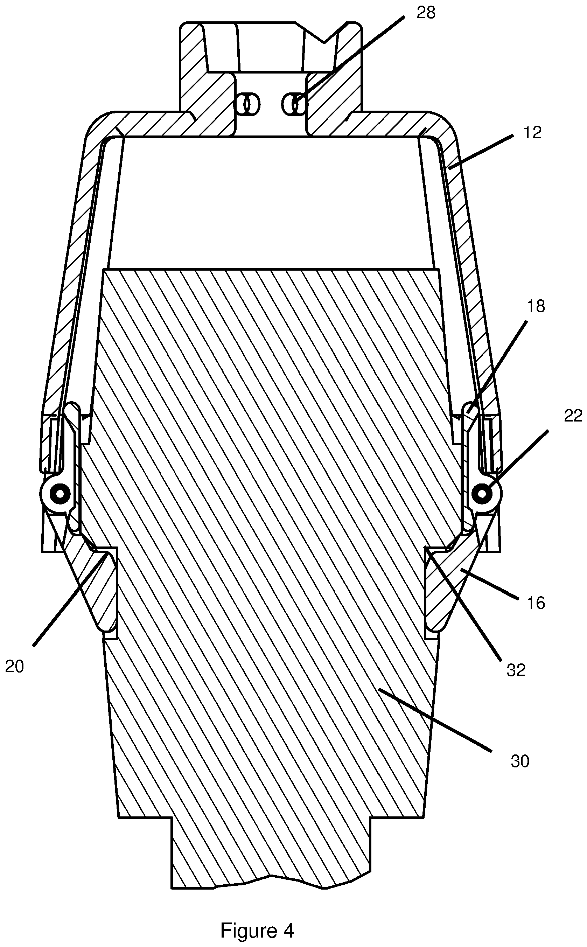

In figure 4 the water meter is fully inserted into the framework and the retainer is in the second, closed position. In this configuration the shoulder 20 of the retainer is engaged with a feature 32 of the water meter. When inserted, the body of the water meter pushes the second tab 18 of the retainer towards the framework as illustrated. This causes the second tab 18 to press against the tail 26 of the spring (visible in figure 3). The spring thus urges the first tab 16 towards the first, open position. However, whilst the retainer is in the closed position as illustrated, the meter can be both lifted and torqued by the operator by manipulating a handle attached to the device. This allows the meter to be lowered into or raised from the boundary box, and to be screwed into or unscrewed from the acceptor valve.

The strength of the spring and the shape of the lower tab are such that application of moderate force by the operator is able to open the retainers. This can be achieved by pulling the device away from the meter when the meter is screwed into the acceptor valve, in a manner opposite to insertion of the meter.

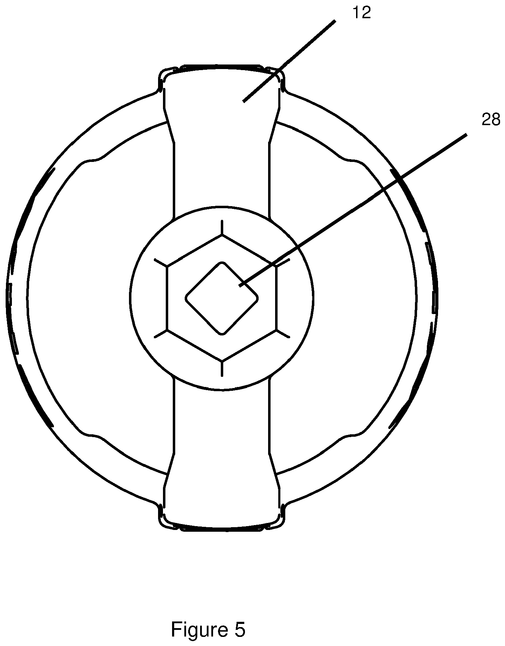

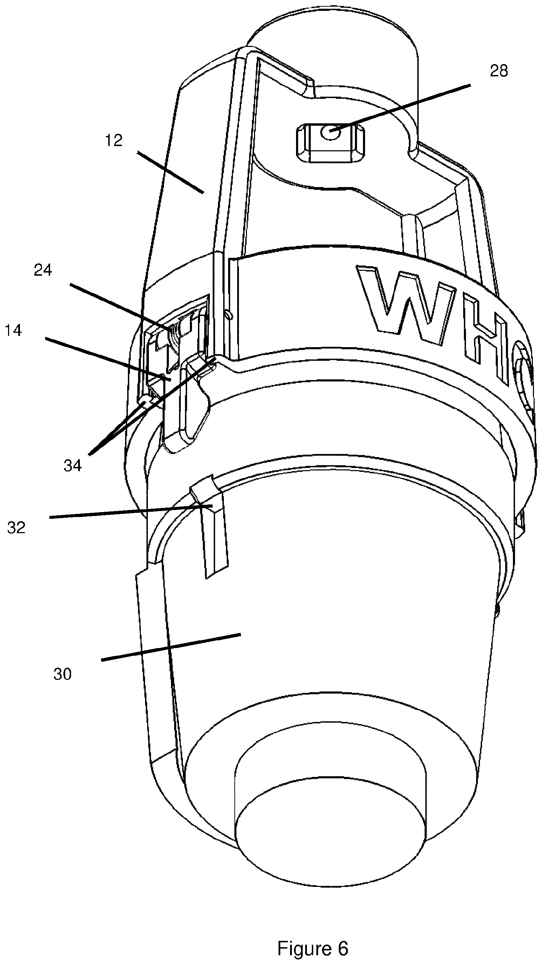

Figure 5 is a plan view of the device. Figure 6 illustrates the device in operation with a water meter 30. The framework 12 comprises a pair of end-stops 34 associated with each retainer 14. Each retainer comprises a corresponding pair of surfaces which abut against the end-stops to the extent to which the first tabs 16 can outwardly rotate. This ensures that the device can be used in a boundary box or other enclosed space where clearance is limited. The water meter has one or more features 32 with sidewalls which allow the retainer to both lift and torque the meter when engaged with the feature. In the embodiment shown, the water meter comprises two oppositely spaced features 32 (only one feature is visible in figure 6 but both are visible in figure 4) wherein each feature 32 is a peripherally disposed vertical groove having a horizontal top wall portion. In use, the first tab 16 of each retainer engages a top wall portion to retain the water meter in the water meter receiving structure. The skilled reader will appreciate that the water meter might instead be provided with other kinds of features that the retainers can engage with to retain the water meter in place, such as apertures or a walled structure defining a tab receiving area. Further variations on the device depicted in the figures are possible. For example, instead of an open framework, the water meter receiving structure may be provided as a structure which is closed, apart from the lower opening into which the water meter is inserted.

## Claims

1. A device (10) for installing or removing a water meter comprising:
a water meter receiving structure (12) into which a water meter can be inserted, the water meter receiving structure 12) comprising a handle or having an attachment point (28) configured to allow a handle to be attached thereto; and
one or more retainers (14) attached to the water meter receiving structure (12), each retainer comprising a biasing element (24) and having a first position and a second position inward of the first position,
**characterised in that** each biasing element (24) urges its respective retainer (14) towards the first position and each retainer (14) is moveable into the second position through contact with the water meter as the water meter is inserted into the water meter receiving structure (12), thereby retaining the water meter in the water meter receiving structure (12) during use.

2. A device (10) according to claim 1 in which each retainer (14) has a third position outward of the first position, wherein each biasing element (24) is configured to urge its respective retainer (14) towards the first position from the third position.

3. A device (10) according to claim 1 or claim 2 in which each retainer (14) comprises a pivot (22) and a first tab (16) which extends downwardly from the pivot, wherein the first tab has a retaining surface which, when the device (10) is in use and the retainer (14) is in the second position, engages the water meter so as to retain it in the water meter receiving structure (12), wherein optionally each retainer (14) further comprises a second tab (18) which extends upwardly from the pivot (22).

4. A device (10) according to claim 3 in which the first and second tabs (16, 18) are connected so that outwardly directed rotation of the second tab (18) causes inwardly directed rotation of the first tab (16) about the pivot (22), thereby causing the retainer (14) to assume the second position.

5. A device (10) according to claim 3 or claim 4 in which each retainer (14) is configured so that when inward rotation of the second tab (18) is prevented, for example through contact with the water meter, the first tab (16) can be outwardly rotated about the pivot (22) independent of the second tab (18).

6. A device (10) according to any one of claims 3 to 5 in which the pivot (22) is housed within the water meter receiving structure (12).

7. A device (10) according to any one of claims 3 to 6 in which the first tab (16) comprises an inwardly inclined shoulder (20), wherein the retaining surface is part of the inwardly inclined shoulder (20).

8. A device (10) according to any previous claim in which each retainer (14) comprises one or more surfaces which are configured to abut against one or more end-stop (34) surfaces of the water meter receiving structure (12) to prevent the retainer (14) from extending substantially outwardly of the water meter receiving structure (12), in which optionally the end-stops (34) prevent the retainer (14) from extending more than 5mm outwardly of the water meter receiving structure (12).

9. A device (10) according to any previous claim in which the biasing element (24) is a spring.

10. A device (10) according to any previous claim in which the water meter receiving structure (12) comprises an aperture through which the water meter can be inserted.

11. A device (10) according to any previous claim in which the water meter receiving structure (12) is a framework structure.

12. A device (10) according to any previous claim in which a portion of each retainer (14) extends below the water meter receiving structure.

13. A method of installing or removing a water meter comprising the steps of:
providing a device (10) according to claim 1;
inserting the water meter into the water meter receiving structure (12), wherein contact with the water meter as it is inserted into the water meter receiving structure (12) causes the retainers (14) to be moved into the second position, thereby retaining the water meter in the water meter receiving structure (12); and
installing the water meter at a site or removing the water meter from a site.

14. A method according to claim 13 in which the water meter comprises one or more peripherally disposed vertical grooves having a top wall portion, wherein each of the retainers (14) engages a top wall portion to retain the water meter in the water meter receiving structure (12).

15. A method according to claim 13 or claim 14 further comprising the step of separating the device (10) from the water meter by applying a separating force to the water meter receiving structure (12) which causes the retainers (14) to move away from the second position, in which the biasing element (24) urges the retainers (14) towards the first position as the separation proceeds.

## Patentansprüche

1. Vorrichtung (10) zum Installieren oder Entfernen eines Wasserzählers, umfassend:
eine Wasserzähleraufnahmestruktur (12), in die ein Wasserzähler eingesetzt werden kann, die Wasserzähleraufnahmestruktur 12) umfassend einen Griff oder aufweisend einen Befestigungspunkt (28), der konfiguriert ist, um zu ermöglichen, dass ein Griff daran befestigt werden kann; und
einen oder mehrere Halter (14), die an der Wasserzähleraufnahmestruktur (12) befestigt sind, jeder Halter umfassend ein Vorspannelement (24) und aufweisend eine erste Position und eine zweite Position nach innen von der ersten Position,
**dadurch gekennzeichnet, dass** jedes Vorspannelement (24) seinen jeweiligen Halter (14) in Richtung der ersten Position drückt und jeder Halter (14) durch Kontakt mit dem Wasserzähler in die zweite Position bewegbar ist, während der Wasserzähler in die Wasserzähleraufnahmestruktur (12) eingesetzt wird, wodurch der Wasserzähler während der Verwendung in der Wasserzähleraufnahmestruktur (12) gehalten wird.

2. Vorrichtung (10) nach Anspruch 1, wobei jeder Halter (14) eine dritte Position nach außen der ersten Position aufweist, wobei jedes Vorspannelement (24) konfiguriert ist, um seinen jeweiligen Halter (14) von der dritten Position in Richtung der ersten Position zu drücken.

3. Vorrichtung (10) nach Anspruch 1 oder 2, wobei jeder Halter (14) einen Drehpunkt (22) und eine erste Lasche (16) umfasst, die sich von dem Drehpunkt nach unten erstreckt, wobei die erste Lasche eine Halteoberfläche aufweist, die, wenn die Vorrichtung (10) in Verwendung ist und der Halter (14) in der zweiten Position ist, in den Wasserzähler eingreift, um ihn in der Wasserzähleraufnahmestruktur (12) zu halten, wobei optional jeder Halter (14) ferner eine zweite Lasche (18) umfasst, die sich von dem Drehpunkt (22) nach oben erstreckt.

4. Vorrichtung (10) nach Anspruch 3, wobei die erste und die zweite Lasche (16, 18) verbunden sind, sodass eine nach außen gerichtete Drehung der zweiten Lasche (18) eine nach innen gerichtete Drehung der ersten Lasche (16) um den Drehpunkt (22) bewirkt, wodurch bewirkt wird, dass der Halter (14) die zweite Position einnimmt.

5. Vorrichtung (10) nach Anspruch 3 oder 4, wobei jeder Halter (14) konfiguriert ist, sodass, wenn eine Innendrehung der zweiten Lasche (18) verhindert wird, beispielsweise durch Kontakt mit dem Wasserzähler, die erste Lasche (16) unabhängig von der zweiten Lasche (18) um den Drehpunkt (22) nach außen gedreht werden kann.

6. Vorrichtung (10) nach einem der Ansprüche 3 bis 5, wobei der Drehpunkt (22) innerhalb der Wasserzähleraufnahmestruktur (12) eingerichtet ist.

7. Vorrichtung (10) nach einem der Ansprüche 3 bis 6, wobei die erste Lasche (16) eine nach innen geneigte Schulter (20) umfasst, wobei die Halteoberfläche Teil der nach innen geneigten Schulter (20) ist.

8. Vorrichtung (10) nach einem der vorstehenden Ansprüche, wobei jeder Halter (14) eine oder mehrere Oberflächen umfasst, die konfiguriert sind, um gegen eine oder mehrere Endanschlagoberflächen (34) der Wasserzähleraufnahmestruktur (12) anzuliegen, um zu verhindern, dass sich der Halter (14) im Wesentlichen nach außen von der Wasserzähleraufnahmestruktur (12) erstreckt, wobei optional die Endanschläge (34) verhindern, dass sich der Halter (14) mehr als 5 mm nach außen von der Wasserzähleraufnahmestruktur (12) erstreckt.

9. Vorrichtung (10) nach einem der vorstehenden Ansprüche, wobei das Vorspannelement (24) eine Feder ist.

10. Vorrichtung (10) nach einem der vorstehenden Ansprüche, wobei die Wasserzähleraufnahmestruktur (12) eine Öffnung umfasst, durch die der Wasserzähler eingesetzt werden kann.

11. Vorrichtung (10) nach einem der vorstehenden Ansprüche, wobei die Wasserzähleraufnahmestruktur (12) eine Gerüststruktur ist.

12. Vorrichtung (10) nach einem der vorstehenden Ansprüche, wobei sich ein Abschnitt jedes Halters (14) unterhalb der Wasserzähleraufnahmestruktur erstreckt.

13. Verfahren zum Installieren oder Entfernen eines Wasserzählers, umfassend die Schritte: Bereitstellen einer Vorrichtung (10) nach Anspruch 1;
Einsetzen des Wasserzählers in die Wasserzähleraufnahmestruktur (12), wobei der Kontakt mit dem Wasserzähler, während er in die Wasserzähleraufnahmestruktur (12) eingesetzt wird, bewirkt, dass die Halter (14) in die zweite Position bewegt werden, wodurch der Wasserzähler in der Wasserzähleraufnahmestruktur (12) gehalten wird; und
Installieren des Wasserzählers an einem Ort oder Entfernen des Wasserzählers von einem Ort.

14. Verfahren nach Anspruch 13, wobei der Wasserzähler eine oder mehrere peripher angeordnete vertikale Rillen umfasst, aufweisend einen oberen Wandabschnitt, wobei jeder der Halter (14) in einen oberen Wandabschnitt eingreift, um den Wasserzähler in der Wasserzähleraufnahmestruktur (12) zu halten.

15. Verfahren nach Anspruch 13 oder 14, ferner umfassend den Schritt eines Trennens der Vorrichtung (10) von dem Wasserzähler durch ein Aufbringen einer Trennkraft auf die Wasserzähleraufnahmestruktur (12), die bewirkt, dass sich die Halter (14) von der zweiten Position wegbewegen, wobei das Vorspannelement (24) die Halter (14) in Richtung der ersten Position drückt, während die Trennung erfolgt.

## Revendications

1. Dispositif (10) d'installation ou de retrait d'un compteur d'eau comprenant :
une structure de réception de compteur d'eau (12) dans laquelle un compteur d'eau peut être inséré, la structure de réception de compteur d'eau (12) comprenant une poignée ou ayant un point de fixation (28) conçu pour permettre à une poignée d'être fixée à celui-ci ; et
un ou plusieurs éléments de retenue (14) fixés à la structure de réception de compteur d'eau (12), chaque élément de retenue comprenant un élément de sollicitation (24) et ayant une première position et une deuxième position vers l'intérieur de la première position,
**caractérisé en ce que** chaque élément de sollicitation (24) pousse son élément de retenue (14) respectif vers la première position et chaque élément de retenue (14) est mobile dans la deuxième position par contact avec le compteur d'eau lorsque le compteur d'eau est inséré dans la structure de réception de compteur d'eau (12), retenant ainsi le compteur d'eau dans la structure de réception de compteur d'eau (12) pendant l'utilisation.

2. Dispositif (10) selon la revendication 1, dans lequel chaque élément de retenue (14) a une troisième position vers l'extérieur de la première position, dans lequel chaque élément de sollicitation (24) est conçu pour pousser son élément de retenue (14) respectif vers la première position à partir de la troisième position.

3. Dispositif (10) selon la revendication 1 ou la revendication 2, dans lequel chaque élément de retenue (14) comprend un pivot (22) et une première languette (16) qui s'étend vers le bas à partir du pivot, dans lequel la première languette a une surface de retenue qui, lorsque le dispositif (10) est en cours d'utilisation et que le dispositif de retenue (14) est dans la deuxième position, entre en prise avec le compteur d'eau de manière à le retenir dans la structure de réception de compteur d'eau (12), dans lequel éventuellement chaque élément de retenue (14) comprend en outre une seconde languette (18) qui s'étend vers le haut à partir du pivot (22).

4. Dispositif (10) selon la revendication 3, dans lequel les première et seconde languettes (16, 18) sont reliées de sorte que la rotation dirigée vers l'extérieur de la seconde languette (18) provoque une rotation dirigée vers l'intérieur de la première languette (16) autour du pivot (22), amenant ainsi le dispositif de retenue (14) à adopter la deuxième position.

5. Dispositif (10) selon la revendication 3 ou la revendication 4, dans lequel chaque élément de retenue (14) est conçu de sorte que, lorsque la rotation vers l'intérieur de la seconde languette (18) est empêchée, par exemple par contact avec le compteur d'eau, la première languette (16) peut être tournée vers l'extérieur autour du pivot (22) indépendamment de la seconde languette (18).

6. Dispositif (10) selon l'une quelconque des revendications 3 à 5, dans lequel le pivot (22) est logé à l'intérieur de la structure de réception de compteur d'eau (12).

7. Dispositif (10) selon l'une quelconque des revendications 3 à 6, dans lequel la première languette (16) comprend un épaulement incliné vers l'intérieur (20), dans lequel la surface de retenue fait partie de l'épaulement incliné vers l'intérieur (20).

8. Dispositif (10) selon l'une quelconque revendication précédente, dans lequel chaque élément de retenue (14) comprend une ou plusieurs surfaces qui sont conçues pour venir en butée contre une ou plusieurs surfaces d'arrêt d'extrémité (34) de la structure de réception de compteur d'eau (12) pour empêcher l'élément de retenue (14) de s'étendre sensiblement vers l'extérieur de la structure de réception de compteur d'eau (12), dans lequel éventuellement les butées d'extrémité (34) empêchent l'élément de retenue (14) de s'étendre plus de 5 mm vers l'extérieur de la structure de réception de compteur d'eau (12).

9. Dispositif (10) selon l'une quelconque revendication précédente, dans lequel l'élément de sollicitation (24) est un ressort.

10. Dispositif (10) selon l'une quelconque revendication précédente, dans lequel la structure de réception de compteur d'eau (12) comprend une ouverture à travers laquelle le compteur d'eau peut être inséré.

11. Dispositif (10) selon l'une quelconque revendication précédente, dans lequel la structure de réception de compteur d'eau (12) est une structure de cadre.

12. Dispositif (10) selon l'une quelconque revendication précédente, dans lequel une partie de chaque élément de retenue (14) s'étend en dessous de la structure de réception de compteur d'eau.

13. Procédé d'installation ou de retrait d'un compteur d'eau comprenant les étapes consistant à : fournir un dispositif (10) selon la revendication 1 ;
insérer le compteur d'eau dans la structure de réception de compteur d'eau (12), dans lequel le contact avec le compteur d'eau lorsqu'il est inséré dans la structure de réception de compteur d'eau (12) amène les éléments de retenue (14) à être déplacés dans la seconde position, retenant ainsi le compteur d'eau dans la structure de réception de compteur d'eau (12) ; et
installer le compteur d'eau sur un site ou retirer le compteur d'eau d'un site.

14. Procédé selon la revendication 13, dans lequel le compteur d'eau comprend une ou plusieurs rainures verticales disposées de manière périphérique ayant une partie de paroi supérieure, dans lequel chacun des éléments de retenue (14) entre en prise avec une partie de paroi supérieure pour retenir le compteur d'eau dans la structure de réception de compteur d'eau (12).

15. Procédé selon la revendication 13 ou la revendication 14, comprenant en outre l'étape consistant à séparer le dispositif (10) du compteur d'eau en appliquant une force de séparation à la structure de réception de compteur d'eau (12) qui amène les éléments de retenue (14) à se déplacer à l'écart de la deuxième position, dans laquelle l'élément de sollicitation (24) pousse les éléments de retenue (14) vers la première position à mesure que la séparation avance.
